Europäisches Patentamt

(19) European Patent Office

Office européen des brevets

(11) Numéro de publication : **0 340 082 B1**

(12) # FASCICULE DE BREVET EUROPEEN

(45) Date de publication du fascicule du brevet :
05.06.91 Bulletin 91/23

(51) Int. Cl.⁵ : **B26D 3/16, H01F 7/06**

(21) Numéro de dépôt : 89401122.0

(22) Date de dépôt : **21.04.89**

---

(54) Dispositif de tronçonnage de tubes.

---

(30) Priorité : 07.10.88 FR 8813157
25.04.88 FR 8805434

(43) Date de publication de la demande :
02.11.89 Bulletin 89/44

(45) Mention de la délivrance du brevet :
05.06.91 Bulletin 91/23

(84) Etats contractants désignés :
BE CH DE ES GB IT LI LU NL SE

(56) Documents cités :
EP-A- 0 225 235
DE-A- 1 778 323
DE-A- 2 015 921

(56) Documents cités :
IBM TECHNICAL DISCLOSURE BULLETIN,
vol. 25, no. 12, mai 1983, pages 6309-6310, New
York, US; J.J. HAGOPIAN: "Disk coating orienting electromagnet"

(73) Titulaire : LHOMME SA (Société anonyme)
Route de Paris
F-89140 Pont sur Yonne (FR)

(72) Inventeur : Languillat, Jean-Paul
Vallières
F-89260 Thorigny sur Oreuse (FR)

(74) Mandataire : Chambon, Gérard
Cabinet Chambon 6 et 8 avenue Salvador
Allende
F-93804 Epinay-sur-Seine Cédex (FR)

EP 0 340 082 B1

## Description

L'invention concerne un dispositif de tronçonnage de tubes.

Il est connu de tronçonner des tubes au moyen de couteaux qui pénètrent dans l'épaisseur du tube alors que celui-ci est entraîné en rotation.

Pour tronçonner certains tubes et plus particulièrement les tubes en matière peu rigide, tels les tubes en carton, il est nécessaire de disposer à l'intérieur du tube une contrepartie sur laquelle le couteau vient finir sa coupe.

Jusqu'à présent, la contrepartie était reliée mécaniquement vers l'extérieur par un moyen disposé à l'intérieur du tube afin d'assurer le maintien de ladite contrepartie en position fixe ou permettre le déplacement longitudinal de celle-ci.

Les tronçonneuses destinées à découper des tubes unitaires en plusieurs tronçons sont en effet munies de couteaux et d'une contrepartie fixes longitudinalement, cette dernière étant aménagée sur un mandrin fixe sur lequel le tube est enfilé.

Au contraire, dans les dispositifs de tronçonnage d'un tube fabriqué en continu, telle une spiraleuse pour tube carton par exemple, il est nécessaire que le ou les couteaux et la contrepartie suivent longitudinalement et de manière synchrone le tube en cours de fabrication, au moment de la coupe, les couteaux et la contrepartie étant ramenés en position initiale après chaque tronçonnage par un moyen passant par le mandrin le roulage de la spiraleuse.

Une liaison mécanique de la contrepartie, vers l'extérieur, et qui est disposée à l'intérieur du tube, est un handicap certain et empêche notamment certaines applications.

C'est pourquoi on a cherché et trouvé un moyen qui permet de maintenir en position et/ou de déplacer la contrepartie dénommée ci-après contre-couteau, sans que celui-ci ne soit relié mécaniquement à un moyen extérieur.

Un tel dispositif de tronçonnage fait notamment l'objet du brevet Français FR-A-2589384 (EP-A-0225235). Le dispositif décrit dans le brevet susmentionné comporte un contre-couteau disposé à l'intérieur du tube à tronçonner et qui est relié mécaniquement à un noyau de forte perméabilité magnétique, tandis qu'un bobinage est enroulé dans une carcasse autour du tube à tronçonner pour créer un champ magnétique dans ledit noyau à travers le tube à tronçonner de manière à pouvoir agir magnétiquement sur la position longitudinale dudit noyau et par là même sur celle du contre-couteau en fonction de la position longitudinale du couteau.

Un tel dispositif donne satisfaction. Toutefois, le bobinage nécessite un dispositif de refroidissement et l'ensemble devient vite très lourd et encombrant dès que l'on arrive à un certain diamètre de tube à tronçonner, par exemple 200 mm.

C'est pourquoi on a imaginé un dispositif capable de générer un champ magnétique au voisinage du tube et ensuite, de canaliser ce champ vers le noyau relié au contre-couteau.

Le dispositif selon l'invention comporte certes, comme celui du brevet précité, un noyau libre relié mécaniquement au contre-couteau et un bobinage, mais ce dispositif est remarquable en ce que ledit bobinage est aménagé autour d'un noyau qui est fixe par rapport audit bobinage et dont l'axe est disposé parallèlement et à distance de l'axe longitudinal du tube à tronçonner, ledit noyau fixe étant pourvu à ses extrémités axiales de prolongements qui s'étendent radialement vers ledit tube et qui sont munis d'évidements pour le passage de ce dernier, de façon que lesdits prolongements entourent ledit tube au moins en partie autour de deux zones qui sont espacées axialement d'une longueur sensiblement voisine de celle du noyau libre, de telle sorte que le flux magnétique créé par le bobinage puisse être canalisé dans le noyau fixe, lesdits prolongements et le noyau libre.

Selon un mode de réalisation particulier de l'invention, le noyau fixe se présente sous la forme d'un cylindre et ses prolongements sous la forme de plaques solidaires dudit cylindre, lesdites plaques étant disposées selon des plans sensiblement perpendiculaires à l'axe dudit cylindre, tandis que l'évidement, dont chaque plaque est munie pour le passage du tube à tronçonner, est ménagé à son extrémité libre et présente la forme d'un ajour en forme de disque. Le mot cylindre doit être pris dans un sens large, bien qu'il s'agisse de préférence d'un cylindre de révolution (la forme du noyau fixe dépend en fait de celle du bobinage). Les prolongements qui s'étendent, selon le mode de réalisation précité, perpendiculairement à l'axe du noyau et donc perpendiculairement audit tube, pourraient, bien sûr, s'étendre autrement, par exemple selon les deux demi-plans d'un dièdre qui se fermerait ou au contraire s'ouvrirait vers le tube.

De préférence, le noyau fixe et ses prolongements sont en deux parties sensiblement symétriques, fixées entre-elles de manière détachable.

Selon un autre mode particulier de réalisation selon l'invention, le dispositif comporte au moins une paire de manchons tubulaires destinés à être emmanchés dans chacun des évidements des prolongements du noyau fixe et qui sont formés avec un matériau de forte perméabilité magnétique, les diamètres respectivement extérieur et intérieur de chaque manchon étant adaptés aux diamètres respectivement intérieur des évidements et extérieur du tube à tronçonner.

Dans ce cas, chaque manchon tubulaire présente avantageusement la forme d'un tronc de cylindre circulaire, tandis que des repères et/ou des moyens de fixation sont prévus de manière telle que la grande dimension longitudinale soit disposée vers le haut et vers l'intérieur, la base circulaire sensiblement perpendiculaire à son axe longitudinale étant disposée du côté tourné vers l'extérieur.

L'invention sera bien comprise à la lecture de la description qui va suivre et qui se réfère aux dessins annexés dans lesquels :

    – la figure 1 montre schématiquement un dispositif selon l'invention avec arrachement partiel,

    – la figure 2 est une coupe schématique axiale d'un dispositif selon l'invention.

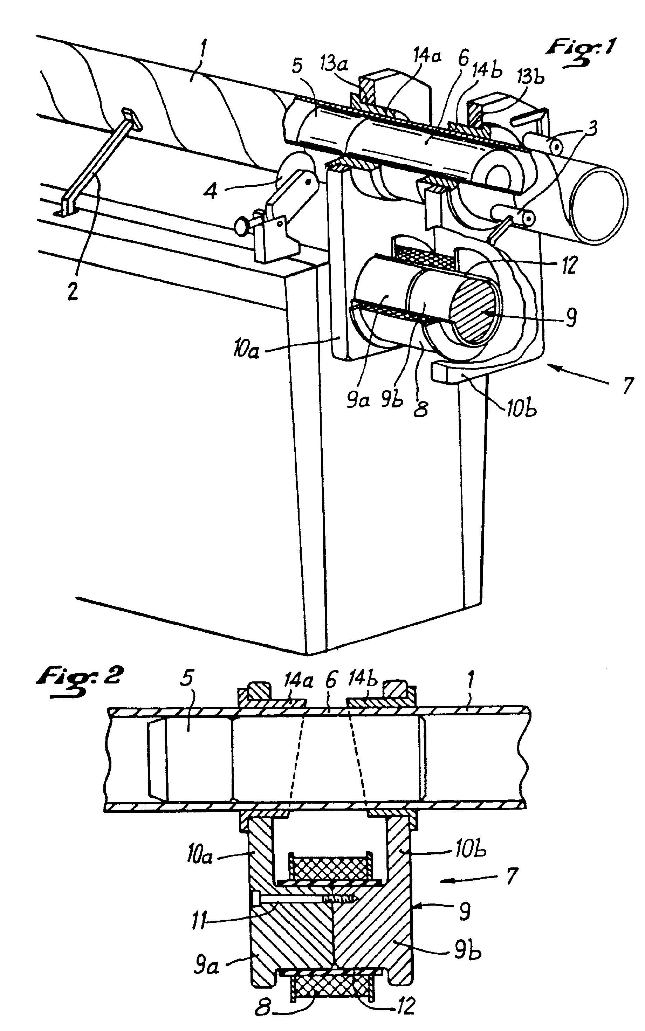

Sur la figure 1, on peut voir en partie une machine destinée à tronçonner des tubes unitaires, tels que le tube représenté en 1 sur les figures (il existe aussi des machines de fabrication en continu, comme déjà dit et dont il sera question plus loin).

Le tube 1 est généralement amené à partir d'un appareil de distribution ou d'alimentation (non représenté) pour mettre en place chaque tube à tronçonner au fur et à mesure des opérations.

Le tube 1 est guidé et centré par des moyens tel que le guide 2 et/ou les cylindres 3 (figure 1).

Vers l'autre extrémité de la machine, des moyens (non représentés) sont prévus pour pousser les tubes à tronçonner et pour les entraîner en rotation.

En effet, pour tronçonner chaque tube, on l'entraîne en rotation devant au moins un couteau 4.

A l'intérieur du tube 1 à tronçonner, est disposée une contrepartie ou contre-couteau 5.

Le contre-couteau 5 est relié mécaniquement à un noyau 6 de forte perméabilité magnétique.

Le noyau 6 permet de maintenir en position le contre-couteau 5 à l'aide d'un moyen d'induction magnétique 7.

Il est clair que le noyau 6 est libre, bien que relié au contre-couteau 5, dans ce sens qu'en l'absence de champ magnétique, il est disposé librement dans le tube 1 et c'est pourquoi il est dénommé ci-après, noyau libre. Par contre, il est bien compris que ledit noyau peut être complètement solidaire du contre-couteau, ou avoir un ou deux degrés de liberté (rotation et/ou translation) par rapport audit contre-couteau.

Le moyen d'induction magnétique 7 comporte un bobinage 8 alimenté électriquement.

Toutefois, alors que le bobinage prévu dans le brevet principal et son premier certificat d'addition, entoure le tube 1, le bobinage 8 entoure ici, par l'intermédiaire d'un isolant 12 formant en partie une carcasse pour ledit bobinage, un noyau fixe 9, en fer doux par exemple, de forme cylindrique et dont l'axe est parallèle et à distance de l'axe du tube 1.

Le noyau 9 est pourvu de deux prolongements 10a, 10b, qui s'étendent, dans ce mode de réalisation, radialement vers le tube 1, c'est-à-dire selon des plans perpendiculaires à l'axe dudit noyau, comme le montrent les figures 1 et 2.

En fait, le noyau 9 est en deux parties 9a et 9b, chacune de ces dernières étant solidaire du prolongement respectivement 10a, 10b, de telle sorte que l'on a deux pièces sensiblement symétriques 9a, 10a et 9b, 10b, qui sont fixées entre-elles, par exemple de manière détachable par une vis 11, comme le montre la figure 2.

Les prolongements 10a et 10b sont chacun pourvus d'un ajour 13a, 13b (figure 1) en forme de disque pour le passage du tube 1 et l'introduction d'un manchon dont il sera question ci-après.

Comme le montrent bien les dessins, les ajours des prolongements 10a, 10b sont réalisés de manière que lesdits prolongements entourent complètement le tube 1.

Toutefois, on pourrait prévoir chaque évidement sous la forme, par exemple, d'un demi ou d'un trois-quart de disque de telle sorte que chaque prolongement n'entoure que partiellement le tube 1.

Comme le montrent les figures 1 et 2, dans chaque ajour 13a, 13b, est emmanché un manchon respectivement 14a, 14b, de forte perméabilité magnétique.

Les diamètres des manchons sont choisis de façon appropriée en fonction, bien sûr, des diamètres des évidements 13a et 13b et du diamètre extérieur du tube à tronçonner.

Les manchons 14a, 14b, présentent un épaulement en vue de venir en butée sur les prolongements en forme de plaques 10a, 10b.

Comme le montrent également bien les figures et plus particulièrement la figure 2, chaque manchon a la forme d'un tronc de cylindre circulaire, la base circulaire sensiblement perpendiculaire à l'axe longitudinal dudit manchon étant destinée à être positionnée du côté tourné vers l'extérieur, comme représenté. On peut voir aussi que la grande dimension longitudinale est destinée à venir dans la partie haute de l'évidement correspondant, et la petite dimension diamétralement opposée, bien sûr vers le bas, des repères et/ou des moyens de fixation étant éventuellement prévus à cet effet.

Les avantages et les utilisations des manchons tels que 14a, 14b sont nombreux. Plusieurs paires de manchons 14a, 14b permettent en effet d'adapter le dispositif aux divers diamètres de tubes à tronçonner, en réduisant au mieux le jeu entre lesdits manchons et le tube. En outre, la forme en tronc de cylindre pour lesdits manchons permet de compenser au moins en partie le poids du noyau libre 6.

L'écartement des prolongements 13a, 13b est assez voisin de la longueur effective du noyau libre 6. De la sorte, on comprend que le flux magnétique créé par le bobinage 8 est bien canalisé dans le noyau fixe 9, les prolongements 10a, 10b, les manchons 14a, 14b et le noyau libre 6.

Enfin, si le mode de réalisation représenté concerne plus particulièrement une tronçonneuse pour tubes unitaires, comme décrit dans le brevet FR-A-2589384, ledit brevet décrit également un dispositif

de tronçonnage pour un tube fabriqué en continu. La présente invention peut s'appliquer aussi aux modes de réalisation pour tubes fabriqués en continu et dans lesquels le moyen d'induction est, soit mobile, soit fixe. Dans ce dernier cas, un élément tubulaire mobile autour du tube est alors prévu de la manière décrite dans le brevet FR-A-2589384. Toujours dans le cas du moyen d'induction fixe avec l'élément tubulaire mobile, les diamètres intérieurs des manchons tiendront, bien sûr, compte du diamètre extérieur dudit élément tubulaire.

## Revendications

1. Dispositif de tronçonnage de tubes, comportant au moins un couteau (4), qui coopère en fin de coupe avec une contrepartie dénommée ci-après contre-couteau (5), lequel est disposé à l'intérieur du tube (1) à tronçonner, tandis qu'il est relié mécaniquement à un noyau libre (6) de forte perméabilité magnétique, un bobinage (8) étant aménagé pour créer un champ magnétique dans ledit noyau libre (6) à travers le tube (1) à tronçonner, de manière à pouvoir agir magnétiquement sur la position longitudinale dudit noyau libre (6) et donc sur celle du contre-couteau (5), dispositif caractérisé en ce que le bobinage (8) est aménagé autour d'un noyau (9) qui est fixe par rapport audit bobinage et dont l'axe est disposé parallèlement et à distance de l'axe longitudinal du tube (1) à tronçonner, ledit noyau fixe (9) étant pourvu à ses extrémités axiales de prolongements (10a, 10b) qui s'étendent radialement vers ledit tube (1) et qui sont munis d'évidements (13a, 13b) pour le passage de ce dernier, de façon que lesdits prolongements (10a, 10b) entourent ledit tube au moins en partie autour de deux zones qui sont espacées axialement d'une longueur sensiblement voisine de celle du noyau libre (6), de telle sorte que le flux magnétique créé par le bobinage (8) puisse être canalisé dans le noyau fixe (9), lesdits prolongements (10a, 10b) et le noyau libre (6).

2. Dispositif selon la revendication 1, caractérisé en ce que le noyau fixe (9) se présente sous la forme d'un cylindre et ses prolongements (10a, 10b) sous la forme de plaques solidaires dudit cylindre, lesdites plaques étant disposées selon des plans sensiblement perpendiculaires à l'axe dudit cylindre, tandis que l'évidement, dont chaque plaque est munie pour le passage du tube à tronçonner, est ménagé à son extrémité libre et présente la forme d'un ajour (13a, 13b) en forme de disque.

3. Dispositif selon l'une des revendications 1 et 2, caractérisé en ce que le noyau fixe (9) et ses prolongements (10a, 10b) sont en deux parties sensiblement symétriques (9a, 10a ; 9b, 10b), fixées entre-elles de manière détachable (11).

4. Dispositif selon l'une des revendications 1 à 3, caractérisé en ce qu'il comporte au moins une paire de manchons (14a, 14b) tubulaires destinés à être emmanchés dans chacun des évidements (13a, 13b) des prolongements (10a, 10b) du noyau fixe (9) et qui sont formés avec un matériau de forte perméabilité magnétique, les diamètres respectivement extérieur et intérieur de chaque manchon étant adaptés aux diamètres respectivement intérieur des évidements et extérieur du tube (1) à tronçonner.

5. Dispositif selon la revendication 4, caractérisé en ce que chaque manchon tubulaire (14a, 14b) a la forme d'un tronc de cylindre circulaire, tandis que des repères et/ou des moyens de fixation sont prévus de manière telle que la grande dimension longitudinale soit disposée vers le haut et vers l'intérieur, la base circulaire sensiblement perpendiculaire à son axe longitudinale étant disposée du côté tourné vers l'extérieur.

## Ansprüche

1. Vorrichtung zum Ablängen von Rohren mit mindestens einem Messer (4), das zum Schnitt mit einem nachfolgend als Gegenmesser (5) bezeichneten Gegenstück zusammenwirkt, welches im Inneren des abzulängenden Rohres (1) angeordnet und mechanisch mit einem freien Kern (6) mit hoher magnetischer Permeabilität verbunden ist, und einer Wicklung (8), die so angeordnet ist, daß sie in dem besagten freien Kern (6) quer zu dem abzulängenden Rohr (1) ein Magnetfeld derart erzeugt, daß es möglich ist, magnetisch auf die Längsposition des besagten freien Kerns (6) und damit auf die Längsposition des Gegenmessers (5) einzuwirken, dadurch gekennzeichnet, daß die Wicklung (8) um einen Kern (9) herum angeordnet ist, der in Bezug auf besagte Wicklung fest angeordnet ist und dessen Achse parallel und mit Abstand zu der Längsachse des abzulängenden Rohres (1) angeordnet ist, wobei der besagte feste Kern (9) an seinen axialen Enden mit Verlängerungen (10a, 10b) versehen ist, die sich in radialer Richtung zu dem besagten Rohr (1) erstrecken und mit Aussparungen (13a, 13b) für den Durchtritt des Rohres versehen sind derart, daß die besagten Verlängerungen (10a, 10b) das besagte Rohr mindestens teilweise in zwei Zonen umfassen, die einen axialen Abstand besitzen, dessen Länge im wesentlichen der Länge des freien Kerns (6) entspricht derart, daß der von der Wicklung (8) erzeugte magnetische Fluß in dem festen Kern (9), den besagten Verlängerungen (10a, 10b) und dem freien Kern (6) gesammelt werden kann.

2. Vorrichtung nach Anspruch 1, dadurch gekennzeichnet, daß der feste Kern (9) die Form eines Zylinders besitzt und seine Verlängerungen (10a, 10b) die Form von mit dem besagten Zylinder fest verbundenen Platten aufweisen, wobei besagte Platten in Ebenen angeordnet sind, die im wesentlichen senkrecht zur Achse des besagten Zylinders liegen, während die Aussparung, mit der jede Platte zum Durchlaß des abzulängenden Rohres versehen ist, an dessen freiem Ende angeordnet ist und die Form eines scheibenförmigen Durchbruchs (13a, 13b) aufweist.

3. Vorrichtung nach einem der Ansprüche 1 oder 2, dadurch gekennzeichnet, daß der feste Kern (9) und seine Verlängerungen (10a, 10b) aus zwei im wesentlichen symmetrischen Teilen (9a, 10a ; 9b, 10b) bestehen, die lösbar (11) aneinander befestigt sind.

4. Vorrichtung nach einem der Ansprüche 1 bis 3, dadurch gekennzeichnet, daß sie mindestens ein Paar rohrförmige Muffen (14a, 14b) aufweist, die zum Einpressen in jede der Aussparungen (13a, 13b) der Verlängerungen (10a, 10b) des festen Kerns (9) bestimmt sind und die aus einem Material mit hoher magnetischer Permeabilität bestehen, wobei der Außen- und Innendurchmesser jeder Muffe jeweils an den Innendurchmesser des Aussparung bzw. den Außendurchmesser des abzulängenden Rohres (1) angepaßt ist.

5. Vorrichtung nach Anspruch 4, dadurch gekennzeichnet, daß jede rohrförmige Muffe (14a, 14b) die Form eines schief abgeschnittenen Kreiszylinders besitzt und Markierungen und/oder Fixiermittel vorgesehen sind derart, daß die große Längsdimension nach oben und innen ausgerichtet ist, während die im wesentlichen senkrecht zu seiner Längsachse stehende kreisförmige Basis an der nach außen gerichteten Seite liegt.

## Claims

1. Apparatus for cutting tubes comprising at least one knife (4) which cooperates at the end of cutting with a counterpart referred to hereinafter as a counter knife (5), which is disposed inside the tube (1) being cut, while it is linked mechanically to a free core (6) of high magnetic permeability, a winding (8) being arranged to create a magnetic field in said free core (6) through the tube (1) being cut, so as to be able to influence the longitudinal position of said free core (6) and thus that of the counter knife (5) magnetically, the apparatus being characterised in that the winding (8) is arranged around a core (9) which is fixed in relation to said winding and the axis of which is disposed parallel with and remote from the longitudinal axis of the tube (1) being cut, said fixed core (9) being provided at its axial ends with extensions (10a, 10b) which extend radially towards said tube (1) and which are provided with recesses (13a, 13b) for passage of the latter, so that said extensions (10a, 10b) surround said tube at least in part around two zones which are spaced axially by a length substantially close to that of the free core (6), so that the magnetic flux created by the winding (8) can be channelled in the fixed core (9), said extensions (10a, 10b) and the free core (6).

2. Apparatus as in claim 1, characterised in that the fixed core (9) takes the form of a cylinder and its extensions (10a, 10b) take the form of plates locked to said cylinder, said plates being disposed in planes substantially perpendicular to the axis of said cylinder, while the recess provided in each plate for passage of the tube being cut is formed at its free end and takes the form of a disc-shaped opening (13a, 13b).

3. Apparatus as in one of claims 1 and 2, characterised in that the fixed core (9) and its extensions (10a, 10b) are in two substantially symmetrical parts (9a, 10a ; 9b, 10b), fixed to one another in a detachable manner (11).

4. Apparatus as in one of claims 1 to 3, characterised in that it comprises at least one pair of tubular sleeves (14a, 14b) designed to be fitted in each of the recesses (13a, 13b) of the extensions (10a, 10b) of the fixed core (9) and formed with a material of high magnetic permeability, the outside and inside diameters respectively of each sleeve being adapted to the inside diameter of the recesses and the outside diameter of the tube (1) being cut respectively

5. Apparatus as in claim 4, characterised in that each tubular sleeve (14a, 14b) has the form of a length of circular cylinder, while markers and/or fixing means are provided so that the large longitudinal dimension is disposed towards the top and towards the inside, the circular base substantially perpendicular to its longitudinal axis being disposed on the side facing outwards.

Fig.1

Fig.2